(19) Europäisches Patentamt
European Patent Office
Office européen des brevets

(11) **EP 3 400 812 A1**

(12) **EUROPEAN PATENT APPLICATION**

(43) Date of publication:
**14.11.2018 Bulletin 2018/46**

(51) Int Cl.:
***A23L 27/12*** *(2016.01)*   ***A23L 33/105*** *(2016.01)*

(21) Application number: **18171653.1**

(22) Date of filing: **09.05.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.05.2017 PT 2017110065**

(71) Applicant: **Universidade Católica Portuguesa - UCP**
**4169-005 Porto (PT)**

(72) Inventors:
• **das Graças Nascimento AMORIM, Adriany**
**64.218-740 Parnaíba - Piau (BR)**
• **de Souza de Almeida LEITE, José Roberto**
**70675-105 Brasilia - Distrito Federal (BR)**
• **Manuela, Esteves PINTADO**
**4200-374 Porto (PT)**

(74) Representative: **Patentree**
**Edificio Net**
**Rua de Salazares, 842**
**4149-002 Porto (PT)**

(54) **OBTAINMENT PROCESS OF CAROTENOIDS CONCENTRATE RICH IN LYCOPENE FROM RED FRUITS AND/OR RED FRUIT PULP**

(57) The present disclosure relates to solid-liquid extraction of extract rich in lycopene from red fruit, namely guava and/or tomato. The process of extraction according to the present invention allows carotenoids extract rich in lycopene. Additionally, the reagent use in the extraction process is suitable for food industry applications, so the process of the present disclosure may produce a product that can be applied in food, in cosmetics and/or in pharmaceutical industry.

EP 3 400 812 A1

## Description

### Technical field

The present subject-matter relates to a lycopene extracting method from fruit namely guava and tomato, including: freezing, heating, crushing, washing with water for impurity removal soluble in water, adding a dehydrating agent and extracting of the lycopene to obtaining a extract rich in lycopene after vacuum drying.

To improve the extraction process, the parameters to be controlled are the freezing, and the extraction temperature. High temperatures can have a negative effect on yield of lycopene during extraction process.

### Background

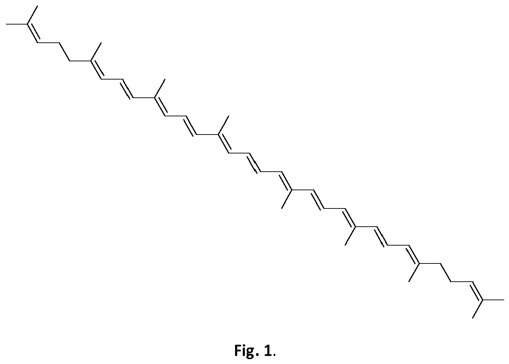

Carotenoids are natural antioxidants that are widely distributed in nature. They are found in vegetables, mainly in fruits of orange and red colour such as carrots, tomatoes, guava, peppers, watermelon and papaya. Carotenoids long chain (C40 to C50) may also be found in some bacterial species, fungal and photosynthetic organisms (see fig. 1).

Carotenoids are divided into two groups: pure hydrocarbons and xanthophylls. Pure hydrocarbons are compounds consisting only of carbon and hydrogen, with molecular formula $C_{40}H_{56}$, with open or cyclic carbon chain and the main representatives are the β-carotene and lycopene. The xanthophylls are carotenoids that have oxygen in their structure in the form of hydroxyl and epoxy, the main are astaxanthin and zeaxanthin.

Lycopene is the most important carotenoid in terms of human health because has high antioxidant capacity and has been suggested to protect humans against many types of cancers, cardiovascular disease and skin protection (BAGETTI et al., 2011).

Lycopene as substance biologically active contribute to the antioxidative defense system of the organism. It is also responsible for the reduction of degenerative diseases as cancer and cardiovascular disease and can be used alone or in mixtures with β-carotene and others natural antioxidants.

Guava products are many manufactured in the food industry as jam, juice and ice cream. A number of processes have been proposed to produce lycopene of red fruits as guava and tomato. Lately, lycopene, the red pigment of the red fruits, has become of substantial interest for the food industry as a natural antioxidant of fruits therefore guava and tomato are varieties that contain a higher content of lycopene.

These facts are disclosed in order to illustrate the technical problem addressed by the present disclosure.

### General Description

An aspect of the present subject matter is a method for extracting and/or separating lycopene from red fruit comprises the following steps:

> freezing the red fruit and/or red fruit pulp;
> heating the freeze fruit and/or red fruit pulp;
> crush the heated fruit and/or red fruit pulp;
> removing the impurities, in particular pectin of the crushed fruit and/or red fruit pulp, preferentially with a washing solvent;
> remove the washing solvent, preferentially by centrifugation;
> proceed the solid-liquid extraction, preferentially with ethanol as solvent;
> drying of the extract by evaporation, preferably under high vacuum.

It is an object of the invention to provide a highly clean process for the lycopene extraction of red fruits as guavas and tomatoes.

The method for extracting and/or separating lycopene from red fruit of the present disclosure, avoid the use of not safe solvents and improve the lycopene extraction and/or separation.

In an embodiment, the red fruit is guava, tomato, watermelon, papaya, grapefruit, mango, red pepper, papaya or mixtures thereof, preferably guava and/or tomato or their pulp.

In an embodiment, the red fruit and/or red fruit pulp is frozen during 30 min to 48h, preferably during 12-24 h.

In an embodiment, the red fruit and/or red fruit pulp is frozen -80 at 0 °C, preferably -20 - 0°C.

In an embodiment, the red fruit and/or red fruit pulp is heated from 30 -120 °C, preferably 30 - 90 °C.

In an embodiment, the red fruit and/or red fruit pulp is heated during 5 min to 2h.

In an embodiment, the temperature of washing and solid-liquid extraction is between 10 - 120 °C, preferably 25 - 45 °C.

In an embodiment, the washing solvent is water.

In an embodiment, the impurities are removed using water preferentially 1:2 - 1:1 (w/v) of washing solvent.

In an embodiment, the water is removed using centrifugation preferentially centrifugal force of 2,000 - 3,000 G.

In an embodiment, the solvent used to extraction of lycopene is ethanol (95 - 99% V/V).

In an embodiment, the ratio washed red fruit and/or red fruit pulp /ethanolic solvent varies between 1:2 - 1:1 (w/v).

In an embodiment, the ethanol is dry under high vacuum.

In an embodiment, the stirring is carried out during 10 min to 2h.

In an embodiment, the steps of remove the washing solvent and proceed the solid-liquid extraction are carried out using stirring during 1 to 40 times, preferably 10 to 30 times.

Another aspect of the present disclosure is an extract obtainable by the method described in the present disclosure, the invention relates to a straightforward method with few steps for obtaining extracts having antioxidant and anti-bacterial properties from lycopene rich extract from red fruit.

Another aspect of the present disclosure is relate to the use of this new lycopene rich extract from read fruit in cosmetic, pharmaceutical composition, food supplement and/or food.

**Brief Description of the Drawings**

The following figures provide preferred embodiments for illustrating the disclosure and should not be seen as limiting the scope of invention.

**Figure 1:** Chemical structure of all-trans lycopene.

**Figure 2.** Chromatographic profile of carotenoids extract from guava (A), tomato (B) and Lycopene.

**Figure 3.** Fluorescence decay curves of fluorescein induced by AAPH in the presence of Trolox (A). Calibration curve for Trolox (B). Fluorescence decay curves of fluorescein induced by AAPH in the presence of LEG, LPG, LET, LPT at pH 7.4 in phosphate.

**Detailed Description**

The present subject-matter relates to process of extraction of carotenoids from red fruit, namely guava and/or tomato. The present disclosure relates to a method of carotenoids extraction including: freezing, heating, crushing, washing, centrifugation, solid-liquid extraction, filtration, stirring and drying of red fruit extract.

The present disclosure relates to solid-liquid extraction of extract rich in lycopene from red fruit, namely guava and/or tomato. The process of extraction according to the present invention allows carotenoids extract rich in lycopene. Additionally, the reagent use in the extraction process is suitable for food industry applications, so the process of the present disclosure may produce a product that can be applied in food, in cosmetics and/or in pharmaceutical industry.

In an embodiment, the identification of the lycopene in carotenoids extract may comprise the following steps:

Preparation of samples

Samples self-ripeness were maintained at -80 °C to 0 °C then were heated at 10 to 200 °C temperature before washing with water to after start extraction process of lycopene.

Reagents and Standards

The ethanol (Portugal) used for lycopene extraction was of analytical grade. The solvents Acetonitrile, Hexane, Dichloromethane and Methanol (Portugal) used for HPLC were of chromatographic grade. The lycopene standard from tomato was purchased from Sigma-Aldrich (Portugal).

Fluorescein, 2,2'-azo-bis-(2-methylpropionamidine)-dihydrochloride (AAPH), 6-hydroxy-2, 5, 7, 8-tetramethylbroman-2-carboxylic acid (Trolox), lycopene standard from tomato were purchased from Sigma-Aldrich (Portugal).

Identification and quantification of lycopene by HPLC-DAD

Carotenoids extracted from guava and from tomato were conducted with Waters 2690 HPLC system with a 996 photodiode array (Waters Series 600, Massachusetts, USA) using a RPAQUEOUS Develosil C30 (4.6 × 150 mm, 5 $\mu$m) column with a guard column containing the same stationary phase (Symmetry® C18) and maintained at room temperature (25 °C) according to the method described by Mariutti et al. (2013). Mobile phase, a solvents mixing: acetonitrile:methanol:hexane:dichloromethane:ammonium acetate (55:22:11.5:11.5:0.02 v/v/v/v/w) was used under isocratic conditions at 1.0 mL/min. UV-vis spectra were collected from 600 to 200 nm in steps of 2 nm. Retention times and spectra were compared with lycopene standard. Calibration curves were constructed with lycopene and were calculated as lycopene equivalents at 472 nm as $\mu$g 100 g$^{-1}$ of fresh biomass.

Free Radical Scavenging by the Oxygen Radical Absorbance Capacity (ORAC) Assay

The Oxygen radical absorbance capacity (ORAC-FL) assay was based on that proposed by Brescia et al. (2012) with modifications. Briefly, the reaction was carried out at 40 °C in 75 mM phosphate buffer (pH 7.4) and the final assay mixture (200 $\mu$L) contained fluorescein (70 nM), AAPH (14 mM), and antioxidant [Trolox (10 at 80 $\mu$M) or sample (at different concentrations)]. The fluorescence was recorded during 137 min (104 cycles). A FLUOstar OPTIMA plate reader (BMG Labtech, Offenburg, Germany) with 485 nm excitation and 520 nm emission filters was used. The equipment was controlled by the FLUOstar Control software version (1.32 R2) for fluorescence measurement. Black polystyrene 96-well microplates (Nunc, Denmark) were used. AAPH and Trolox solutions were prepared daily and fluorescein was diluted from a stock solution (1.17 mM) in 75 mM phosphate buffer (pH 7.4). All reaction mixtures were prepared in duplicate and at least three independent runs were performed for each sample. ORAC-FL values were expressed as $\mu$mol Trolox g$^{-1}$. The following calibration curve was used:

$$y = 0.4638x + 4.7490 \ (r^2 = 0.9992) \qquad (Eq. \ 1)$$

Where: x = ORAC value in $\mu$mol Trolox g$^{-1}$; y= area below fluorescence decay curve (AUC) of sample or standard minus area below fluorescence decay curve of blank. AUC can be calculated through equation 3 (Brescia 2012):

$$AUC = (R_1 / R_1 + R_2 / R_1 + ... R_n / R_1) \ (Eq. \ 2)$$

Where $R_1$ is the fluorescence read at the onset of the reaction and $R_n$ is the last measurement.

$$Net \ AUC = AUCsample - AUCblank \ (Eq. \ 3)$$

One of the objective of this disclosure was minimize the organic solvent use in the extraction of lycopene. Therefore, were combined: freezing and heating temperatures, then of the washing with water and use of ethanol as reagent suitable for food industry and in addition minimize the isomerization effects during the production process of lycopene.

One of the objective of this disclosure was to develop an efficient extraction by clean process for obtain carotenoids extract rich in lycopene from guava or from tomato. The factors that may influence on the content and composition of lycopene in carotenoids extract were: temperature, liquid/mass ratio and type of solvent. HPLC-DAD was used to characterize lycopene composition in carotenoids extract.

In an embodiment, guava was obtained by producer DITALPI (Distrito de Irrigação Tabuleiros Litorâneos do Piauí), located in Parnaíba (Piauí-Brazil), in September, 2014 and tomato cultivar Anairis was bought at the supermarket in Portugal.

*Extraction of carotenoids concentrate rich in lycopene*

In an embodiment, around from 100 g to 10,000 g of fresh sample was frozen between -80 °C to 0 °C. The sample was heating 10 °C to 200 °C in water. The entire samples were crushed in food machine. The sample was washing with 100 mL to 30,000 mL of water of 1 to 40 times during 10 min to 2h and centrifuged before repeating this step. The centrifugation was carried out in horizontal centrifuge until complete decantation of fruit. The centrifugal force used should be between 1,500 G and 5,000 G. The lycopene were extracted using 100 mL to 30,000 mL of ethanol for 1 to 40 times during 10 min to 2h and filtered before repeating this step. During washing with water and extraction with ethanol the mixtures were heated between 10 °C and 120 °C. Then, the ethanolic extract was vacuum drying in rotoevaporator between 0 and 900 bars and 10 °C to 200 °C.

The carotenoids extract rich in lycopene from red guava or from tomato were dissolved in chloroform and used for the determination of lycopene content by HPLC-DAD using C30 column.

In an embodiment, all measurements were carried out in triplicate. The dates for lycopene content were reported as means $\pm$ SD for sample.

In an embodiment, an isocratic elution-based HPLC-DAD method was developed for the analysis and quantification of lycopene in carotenoids extracts from guava and from tomato. Identification of individual lycopene in the extracts was performed by comparison of the retention time with chromatogram profile of authentic standard. Whereas lycopene was tentatively identified by literature data obtained from previous studies (MARIUTTI et al., 2013; BAGETTI et al., 2011).

In an embodiment, lycopene was determined in guava and tomato extracts. It was observed that ethanol was found to be the most efficient solvent for extraction of lycopene in guava in comparison to other solvent systems. The extraction efficiency was found when the washing with water before extracting with ethanol.

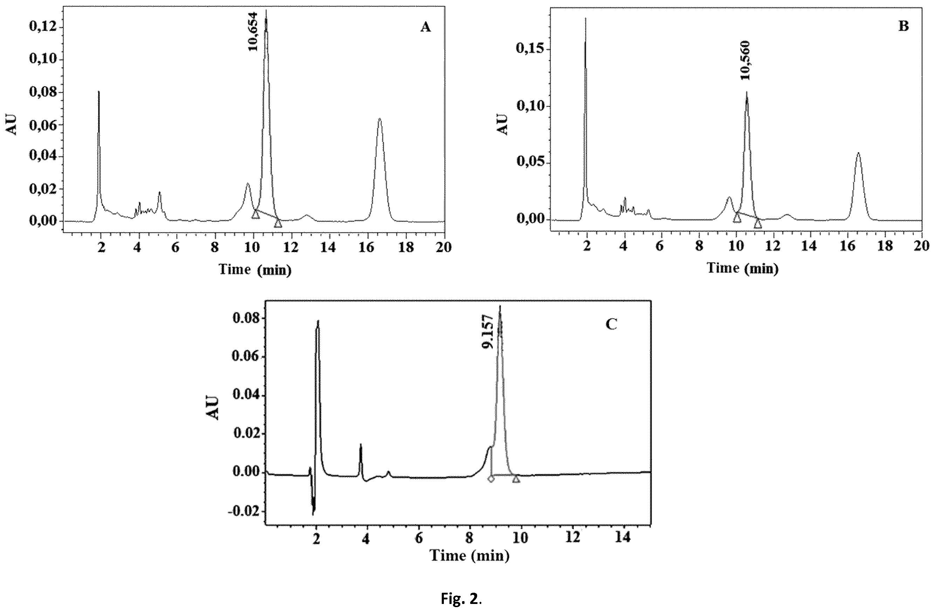

In an embodiment, the carotenoids found in guava and tomato samples in the present study were β-carotene, all-trans and 5-*cis* lycopene (Figure 2). All-trans lycopene was detected as a minor carotenoid. Guava from DITALPI had higher 5-*cis* lycopene content (91 $\mu$g g$^{-1}$) than that tomato (76 $\mu$g g$^{-1}$) as all-trans lycopene content (13 $\mu$g g$^{-1}$ guava and 10 $\mu$g g$^{-1}$ tomato) considered as important sources of lycopene. Moreover, β-carotene content was less in both guava and tomato (31 $\mu$g g$^{-1}$). The lycopene content (166 $\mu$g g$^{-1}$) is higher than the β-carotene (2.9 $\mu$g g$^{-1}$) content in red fruits (BAGETTI et al., 2011). Both guava and tomato has higher lycopene content than β-carotene when compared with other fruits (BERTAGNOLLI et al., 2014) and they presented similar results in this study. All the extracts analysed in this study had the common feature that 5-*cis* lycopene, all-trans lycopene and β-carotene were the main carotenoids in guava and tomato.

In an embodiment, ethanolic extraction previously washing with water 1:1 to 1:10 (m/v) was led to maximum lycopene content in guava that showed the highest lycopene content when compared tomato according to HPLC-DAD quantification.

In an embodiment, composition and chemical structure of the lycopene in different samples of the nature showed that different isomers are producing after process extraction and can is bond with chemical characteristics of the organic solvent (HONDA ETAL., 2015; COLLE et al., 2013; VALLVERDÚ-QUERALT ET AL., 2012). However, low thermal stability of the lycopene causes the heating when applied at the lycopene extraction can degrade and isomerize lycopene (PHAN-THI et al., 2014; EH and TEOH, 2012). Based on this, the release of lycopene compounds shows differences under the lycopene standard (Figure 2).

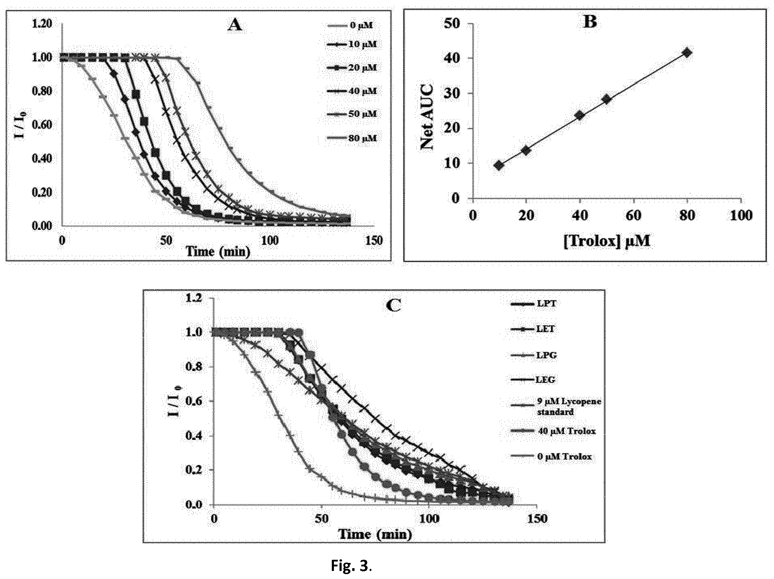

In an embodiment, the results showed that extracts did exhibit lycopene and others carotenoids, as β-carotene. The antioxidant activity by ORAC - Oxygen radical absorbance capacity- of the extracts was higher than pure lycopene (Fig. 3C) due to the high levels of others carotenoids within in extracts by HPLC-DAD (Figure 2).

The resultant antioxidant capacity by ORAC ($r^2$ = 0.9992, Figure 3) was the difference between the sample and the blank AUC, where AUC is calculated as the integral of the area under the curve. Simple linear regression was carried out to assess correlations of ORAC values and the levels of antioxidants. The values for tomato extract - LET and purified lycopene from tomato - LPT (297.92 + 36.37 and 283.28 + 55.76 $\mu$M Trolox g$^{-1}$, respectively) were significantly lower than those for guava extract - LEG and purified lycopene from guava - LPG (402.80 + 44.40 and 315.39 + 27.98 $\mu$M Trolox g$^{-1}$).

In an embodiment, the chromatographic separation enabled the identification of lycopene present in guava and tomato. The guava and tomato extracts could attract prominent interest among other agricultural food, as an inexpensive and very promising source of lycopene, which can be exploited in the pharmaceutical, food and cosmetics industries.

The present invention relates to an extraction method by red fruits processing. The aim of this study was to develop an extraction method of carotenoid extract rich in lycopene with high added value, using clean technology and working with waste from the production chain of red fruits as guava and tomato. Our earlier observations show that a high degree ripening guava and tomato were rich in lycopene, making it a viable feedstock of carotenoid extraction method proposed in this document. The technology used here provides a method that uses water as washing solvent and ethanol as extraction solvent in order to obtain carotenoids extract rich in lycopene without restrictions on the use as an additive in the food industry, cosmetics and pharmaceuticals.

One of the objectives of the present invention is provide a clean method capable for extracting the lycopene and obtained carotenoids concentrate rich in lycopene.

In an embodiment, the method of lycopene extraction from guava and/or tomato comprises the following steps:

a) preparation of samples by freezing them preferentially between -80 °C at 0 °C, most preferentially at -20 °C;

b) preparation of samples by heating them preferentially between 10 °C at 200 °C, most preferentially at 80 °C;

c) preparation of samples preferentially by conventional operations, most preferentially by crushing;

d) water preferentially as washing solvent for removing impurities and pectin, most preferentially 1:2 (m/v);

e) before repeating the step of washing the content shall be centrifuged;

f) centrifugation preferentially used to decant the fruit and removal the water, most preferentially with centrifugal force of 3,000 G;

g) extraction preferentially with ethanolic solvent to solid-liquid extraction process, most preferentially 1:2 (m/v) ;

h) washing and extraction preferentially using stirring, temperature around 40 °C;

i) before repeating the step of ethanolic extraction the content must be filtered;

j) washing and extraction in shake, preferentially 3 to 8 times;

k) vacuum drying preferentially for obtaining dry carotenoids extract rich in lycopene;

l) identification and quantification of lycopene by the HPLC-DAD method;

m) identification of the antioxidant activity of the extract by ORAC method.

In a preferable embodiment of the lycopene extraction method of the present disclosure, the extraction process of step b) preparation of samples by freezing them preferentially between -80 °C at 0 °C, most preferentially at -20 - 0 °C; c) preparation of samples by heating them preferentially between 10 at 200 °C, preferably at 80 - 120 °C; and d) water preferentially as washing solvent for removing impurities.

In another preferable embodiment of the lycopene extraction method of the present disclosure the yield of the dried extracts is between 1 and 100 % of lycopene, preferably more than 30%.

The lycopene extraction method of the present disclosure has an advantage a short extraction time due the step of freezing, heating and preferably removing impurities before of process extraction. The lycopene extraction method of the present disclosure also uses simple equipment and the production cost is low.

The use of lycopene obtainable by the lycopene extraction method of the present disclosure is as pharmaceutical, food and/or cosmetic products.

Finally the lycopene extraction method of the present disclosure is easy, has wide raw material source and low cost as guava and tomato material source of lycopene production and avoids resource waste. Increases economic benefit of red fruits industry, and has wide development prospect in carotenoids area.

The term "comprising" whenever used in this document is intended to indicate the presence of stated features, integers, steps, components, but not to preclude the presence or addition of one or more other features, integers, steps, components or groups thereof.

Where ranges are given, endpoints are included. Furthermore, it is to be understood that unless otherwise indicated or otherwise evident from the context and/or the understanding of one of ordinary skill in the art, values that are expressed as ranges can assume any specific value within the stated ranges in different embodiments of the invention, to the tenth of the unit of the lower limit of the range, unless the context clearly dictates otherwise. It is also to be understood that unless otherwise indicated or otherwise evident from the context and/or the understanding of one of ordinary skill in the art, values expressed as ranges can assume any subrange within the given range, wherein the endpoints of the subrange are expressed to the same degree of accuracy as the tenth of the unit of the lower limit of the range.

The disclosure should not be seen in any way restricted to the embodiments described and a person with ordinary skill in the art will foresee many possibilities to modifications thereof.

The above described embodiments are combinable.

The following claims further set out particular embodiments of the disclosure.

## Claims

1. A method for extracting and/or separating lycopene from red fruit comprises the following steps:

- freezing the red fruit and/or red fruit pulp;
- heating the freeze fruit and/or red fruit pulp;
- crush the heated fruit and/or red fruit pulp;
- removing the impurities, in particular pectin, of the crushed red fruit and/or pulp fruit, preferentially with a heated washing solvent;
- optionally remove the washing solvent, preferentially by centrifugation;

- proceed the solid-liquid extraction, preferentially with ethanol as solvent;
- drying the obtained extract by evaporation, preferably under high vacuum.

2. Method according to claim 1 wherein the red fruit is guava, tomato, watermelon, papaya, grapefruit, mango, red pepper, papaya or mixtures thereof; preferably guava and/or tomato.

3. Method according to any of the previous claims wherein the red fruit and/or red fruit pulp is frozen during 30 min to 48h, preferably during 12 - 24 h.

4. Method according to any of the previous claim wherein the red fruit and/or red fruit pulp is frozen -80 at 0 °C, preferably -20 - 0°C.

5. Method according to any of the previous claim wherein the red fruit and/or red fruit pulp is heated from 30 - 120 °C, preferably 30 - 90 °C.

6. Method according to any of the previous claims wherein the red fruit and/or red fruit pulp is heated during 5 min to 2h.

7. Method according to any of the previous claims wherein the temperature of washing and solid-liquid extraction is between 10 - 120 °C, preferably 25- 45 °C.

8. Method according to any of the previous claims wherein the washing solvent is water.

9. Method according to any of the previous claims wherein the impurities are removed using water preferentially 1:2 - 1:1 (w/v) of washing solvent.

10. Method according to any of the previous claims wherein the ethanolic solvent is ethanol, preferably wherein the ratio extract/ethanolic solvent vary between 1:2 - 1:1 (w/v).

11. Method according to any of the previous claims wherein the ethanol is dry under high vacuum.

12. Method according to any of the previous claims wherein the stirring is carried out during 10 min to 2h.

13. Method according to any of the previous claims wherein the steps the steps of remove the washing solvent and/or proceed the solid-liquid extraction are carried out using stirring during 1 to 40 times, preferably 10 to 40 times.

14. Lycopene extract obtainable by the method described in any of the previous claims.

15. Use of lycopene extract obtainable by the method described in any of the previous claims in cosmetic, pharmaceutical composition, food supplement and/or food product.

**Fig. 1**.

EP 3 400 812 A1

Fig. 2.

9

Fig. 3.

Europäisches
Patentamt

European
Patent Office

Office européen
des brevets

## EUROPEAN SEARCH REPORT

Application Number

EP 18 17 1653

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MARTA M CALVO ET AL: "Influence of extraction with ethanol or ethyl acetate on the yield of lycopene, [beta]-carotene, phytoene and phytofluene from tomato peel powder", EUROPEAN FOOD RESEARCH AND TECHNOLOGY, SPRINGER BERLIN HEIDELBERG, vol. 224, no. 5, 4 May 2006 (2006-05-04), pages 567-571, XP019472090, ISSN: 1438-2385 * Sample preparation Extraction Conditions; figure 2; table 1 * ----- | 1-15 | INV. A23L27/12 A23L33/105 |

TECHNICAL FIELDS
SEARCHED (IPC)

A23L

The present search report has been drawn up for all claims

| Place of search | Date of completion of the search | Examiner |
|---|---|---|
| Munich | 19 September 2018 | Graham, Judith |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

....................................................................

& : member of the same patent family, corresponding
document

EPO FORM 1503 03.82 (P04C01)